# EUROPÄISCHE PATENTSCHRIFT

(11) **EP 1 689 236 B1**
(45) Veröffentlichungstag und Bekanntmachung des Hinweises auf die Patenterteilung: **18.04.2018**
(21) Anmeldenummer: 04819206.6
(22) Anmeldetag: 19.11.2004
(51) Int. Cl.: A01N 47/38, A01N 25/04, A01N 43/80, A01N 43/56, A01N 41/06, A01N 25/32, A01N 25/30, A01N 25/08, A01N 25/02

(54) **ÖLSUSPENSIONSKONZENTRAT**
CONCENTRATED OILY SUSPENSION
SUSPENSION CONCENTREE HUILEUSE

(30) Priorität: 28.11.2003 EP 03013389; 22.05.2004 DE 102004025220
(43) Veröffentlichungstag der Anmeldung: 16.08.2006
(73) Patentinhaber: Bayer Intellectual Property GmbH, 40789 Monheim am Rhein (DE)
(72) Erfinder: SCHNABEL, Gerhard, 63820 Elsenfeld (DE); HAASE, Detlev, 65929 Frankfurt (DE); DECKWER, Roland, 65929 Frankfurt (DE)
(74) Vertreter: BIP Patents
(86) Internationale Anmeldenummer: PCT/EP2004/013154
(87) Internationale Veröffentlichungsnummer: WO 2005/051082

(56) Entgegenhaltungen:
- EP-A- 0 789 999
- WO-A-01/30156
- WO-A-01/82693
- WO-A-03/026427
- WO-A1-2004/054364
- DE-A1- 10 258 216
- DE-A1- 10 317 779
- DE-A1- 10 351 233
- US-A- 6 165 940

## Beschreibung

Die vorliegende Erfindung betrifft das Gebiet der Pflanzenschutzmittelformulierungen. Insbesondere betrifft die Erfindung flüssige Formulierungen in Form von Ölsuspensionskonzentraten, welche herbizide Wirkstoffe aus der Gruppe der Thienyl-Sulfonamide enthalten.

Wirkstoffe für den Pflanzenschutz werden im allgemeinen nicht in ihrer reinen Form eingesetzt. In Abhängigkeit von dem Anwendungsgebiet und der Anwendungsart, sowie von physikalischen, chemischen und biologischen Parametern wird der Wirkstoff in Mischung mit üblichen Hilfs- und Zusatzstoffen als Wirkstoffformulierung eingesetzt. Auch die Kombinationen mit weiteren Wirkstoffen zur Erweiterung des Wirkungsspektrum und/oder zum Schutz der Kulturpflanzen (z.B. durch Safener, Antidote) sind bekannt.

Formulierungen von Wirkstoffen für den Pflanzenschutz sollten im allgemeinen eine hohe chemische und physikalische Stabilität, eine gute Applizierbarkeit und Anwenderfreundlichkeit und eine breite biologische Wirkung mit hoher Selektivität aufweisen.

Herbizide Wirkstoffe aus der Gruppe der Sulfonamide weisen im allgemeinen ein hohes Maß an chemischer Reaktivität auf und neigen zum chemischen Abbau, z.B. durch Hydrolyse.

Eine Möglichkeit chemisch labile Wirkstoffe zu formulieren, ist die Herstellung fester Formulierungen. So sind Formulierungen von Wirkstoffen aus der Gruppe der Sulfonamide, in Form von Pulvern, Granulaten und Tabletten bekannt (z. B. in EP 764404, WO 9834482, WO 9313658). Die Verfahren zur Herstellung von festen Formulierungen, z.B. in Form von Granulaten und Tabletten sind jedoch im allgemeinen aufwendig, insbesondere wenn niedrig schmelzende Wirkstoffe oder Hilfs- und Zusatzstoffe eingearbeitet werden. Außerdem sind feste Formulierungen im allgemeinen schwieriger zu applizieren und weniger anwenderfreundlich.

Flüssige Formulierungen von Sulfonamiden sind z.B. beschrieben in US 4599412, US 4683000, US 4671817, EP 0245058, WO 01/82693, EP 0313317, EP 0514768, EP 0163598 und EP 0514769. Thienylsulfonamide sind z.B. beschrieben in WO 01/05788, WO 03/026426 und WO 03/026427.

Die Aufgabe der vorliegenden Erfindung bestand darin, eine verbesserte Pflanzenschutzmittelformulierung zur Verfügung zu stellen, welche eine hohe chemische und physikalische Stabilität aufweist.

Diese Aufgabe wird gelöst durch das spezielle Ölsuspensionskonzentrat der vorliegenden Erfindung.

Die vorliegende Erfindung betrifft somit ein Ölsuspensionskonzentrat wie in den Ansprüchen beschrieben.

Darüber hinaus kann das erfindungsgemäße Ölsuspensionskonzentrat als weitere Komponenten gegebenenfalls noch enthalten:
c) ein oder mehrere Safener,
d) ein oder mehrere Sulfosuccinate,
e) einen oder mehrere von a) und c) verschiedene agrochemische Wirkstoffe,
f) ein oder mehrere anorganische Salze, und
g) übliche Hilfs- und Zusatzstoffe.

Unter dem Begriff Ölsuspensionskonzentrat (OD) wird ein Suspensionskonzentrat auf Basis organischer Lösungsmittel verstanden. Dabei sind ein oder mehrere Wirkstoffe in dem organischen Lösungsmittel suspendiert, weitere Wirkstoffe können in dem organischen Lösungsmittel gelöst sein.

In dem erfindungsgemäßen Ölsuspensionskonzentrat liegt das Thienyl-Sulfonamid a) in suspendierter Form in dem organischen Lösungsmittel vor. Dies bedeutet, daß der Hauptanteil (in Gew.-%) an Thienyl-Sulfonamid a) ungelöst in fein verteilter Form vorliegt, ein geringerer Teil des Thienyl-Sulfonamids a) kann gelöst vorliegen. Vorzugsweise ist das Thienyl-Sulfonamid a) im organischen Lösungsmittel zu mehr als 50 Gew.-%, besonders bevorzugt zu mehr als 80 Gew.-%, ganz besonders bevorzugt zu mehr als 90 Gew.-% suspendiert, jeweils bezogen auf die Gesamtmenge an Thienyl-Sulfonamid a) in dem erfindungsgemäßen Ölsuspensionskonzentrat.

Die Thienyl-Sulfonamide a) sind Thienylsulfonylaminocarbonyltriazolinone.

Bei den Thienylsulfonylaminocarbonyltriazolinonen handelt es sich um die nachfolgend genannten Verbindungen der Formel (II), die z.B. bekannt sind aus WO 03/026427 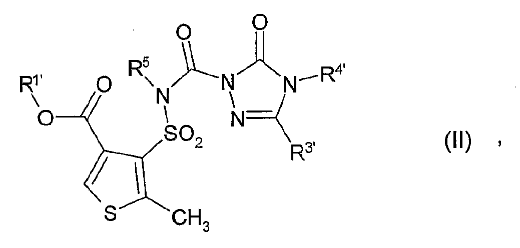 worin
- R^{1'}: für CH₃,
- R^{3'}: für OCH₃,
- R^{4'}: für CH₃ und
- R⁵: für H (Verbindung A2.1) oder Natrium (Verbindung A2.2) steht.

Unter den in den erfindungsgemäßen Ölsuspensionskonzentraten als Komponente a) enthaltenen Thienyl-Sulfonamiden werden im Sinne der vorliegenden Erfindung stets die Anwendungsformen Säure, Natriumsalz und Isomere wie Stereoisomere und optische Isomere verstanden. So sind neben der neutralen Verbindung stets auch dessen Natriumsalz zu verstehen. So können Sulfonamide z.B. Salze bilden, bei denen der Wasserstoff der -SO₂-NH-Gruppe durch ein für die Landwirtschaft geeignetes Kation ersetzt ist. Dieses Salz ist das Natriumsalz.

Die herbiziden Wirkstoffe a) sind in den erfindungsgemäßen Ölsuspensionskonzentraten im allgemeinen in Mengen von 0,01 bis 50 Gew.%, bevorzugt 0,1 bis 30 Gew.% enthalten, dabei bezieht sich die Angabe "Gew.%" hier und in der gesamten Beschreibung, wenn nicht anders definiert, auf das relative Gewicht der jeweiligen Komponente bezogen auf das Gesamtgewicht der Formulierung.

Das polare aprotische Lösungsmittel b) ist Propylencarbonat

Als organische Lösungsmittel kommen z.B. in Frage:
1) Kohlenwasserstoffe, die unsubstituiert oder substituiert sein können, z.B.
   1a) aromatische Kohlenwasserstoffe, z.B.
      - ein- oder mehrfach alkyl-substituierte Benzole wie Toluol, Xylole, Mesitylen, Ethylbenzol, oder
      - ein- oder mehrfach alkyl-substituierte Naphthaline wie 1-Methylnaphthalin, 2-Methylnaphthalin oder Dimethylnaphthalin, oder
      - andere vom Benzol abgeleitete aromatische Kohlenwasserstoffe, wie Indan oder Tetralin®, oder
      - Gemische hieraus,
   1b) aliphatische Kohlenwasserstoffe, z.B.
      - lineare oder verzweigte Aliphaten, z.B. der allgemeinen Formel CₙH₂ₙ₊₂, wie Pentan, Hexan, Octan, 2-Methylbutan oder 2,2,4-Trimethylpentan, oder
      - cyclische, gegebenenfalls alkyl-substituierte Aliphaten, wie Cyclohexan oder Methylcyclopentan, oder
      - Gemische hieraus, wie Lösungsmittel der Exxsol®D-Reihe, Isopar®-Reihe oder Bayol®-Reihe z.B. Bayol®82 (ExxonMobil Chemicals) oder der Isane®IP-Reihe oder Hydroseal®G-Reihe (TotalFinaElf),
   1c) Gemische von aromatischen und aliphatischen Kohlenwasserstoffen, wie Lösungsmittel der Solvesso®-Reihe z.B. Solvesso®100, Solvesso®150 oder Solvesso®200 (ExxonMobil Chemicals), der Solvarex®/Solvaro®-Reihe (TotalFinaElf) oder der Caromax®-Reihe z.B. Caromax®28 (Petrochem Carless), oder
   1d) halogenierte Kohlenwasserstoffe wie halogenierte aromatische und aliphatische Kohlenwasserstoffe, wie Chlorbenzol oder Methylenchlorid, oder
2) polare Lösungsmittel, z.B. aprotische, polare Lösungsmittel, wie Vollether und Vollester von C₁-C₉-Alkansäuren, die mono-, di- oder polyfunktional sein können, z.B. die Ether und Ester mit C₁-C₁₈-Alkylalkoholen, Ketone mit geringer Tautomerietendenz, Phophorsäureester, Amide, Nitrile oder Sulfone, z.B. Diisobutyladipat, Rhodiasolv® RPDE (Rhodia), Cyclohexanon, Jeffsol®PC (Huntsman), γ-Butyrotacton, N-Methylpyrrolidon, Dimethylsulfoxid, Acetonitril, Tributylphosphatam oder Hostarex®PO-Reihe (Clariant), oder
   protische polare Lösungsmittel wie Alkohole, Amine oder Carbonsäuren. Die Alkohole, Amine oder Carbonsäuren, weisen bevorzugt 1 bis 18C-Atome auf und können linear, verzweigt oder cyclisch, gesättigt oder ungesättigt sein, gegebenenfalls Heteroatome enthalten und ein- oder mehrfach funktionalisiert sein. Beispiele für Alkohole sind monofunktionelle C₁-C₁₀-Alkohole wie Methanol, Ethanol, Propanol, Isopropanol, Heptanol, Octanol, Isooctanol oder Phenol, oder Polyole wie Glycerin oder Polygykole, kommerziell z.B. erhältlich als Exxal®-Reihe (ExxonMobil), Agrisynth® PA (ISP), Arcosolv®-Reihe (Lyondell Chemical) oder Nacol® 6-98 (DEA). Beispiele für Amine sind Diethylamin, Hexylamin oder Anilin. Beispiele für Carbonsäuren sind Adipinsäure und Adipinsäuremonoester.
3) Fettsäureester, z.B. natürlichen Ursprungs, z.B. natürliche Öle wie tierische Öle oder Pflanzenöle, oder synthetischen Ursprungs, z.B. Edenor®-Reihe z.B. Edenor®MEPa oder Edenor®MESU oder Agnique®ME-Reihe oder Agnique®AE-Reihe (Cognis), Salim®ME-Reihe (Salim), Radia®-Reihe z.B. Radia®30167 (ICI), Prilube®-Reihe z.B. Prilube®1530 (Petrofina), Stepan®C-Reihe (Stepan) oder Witconol®23-Reihe (Witco). Die Fettsäureester sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Fettsäureester wie C₁₀-C₂₂-Fettsäure-Ester sind Glycerin- und Glykolester von Fettsäuren wie C₁₀-C₂₂-Fettsäuren oder deren Umesterungsprodukte, z.B. Alkyl-Fettsäureester wie C₁-C₂₀-Alkyl-C₁₀-C₂₂-Fettsäure-Ester, wie sie z.B. durch Umesterung der vorgenannten Glycerin- oder Glykol-Fettsäureester wie C₁₀-C₂₂-Fettsäure-Ester mit C₁-C₂₀)-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als Alkyl-Fettsäureester wie C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-Fettsäureester wie C₁₀-C₂₂-FettsäureEster bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Tierische Öle sind allgemein bekannt und kommerziell erhältlich. Unter dem Begriff tierische Öle im Sinne der vorliegenden Erfindung werden z.B. Öle tierischen Ursprungs verstanden wie Waltranöl, Lebertranöl, Moschusöl oder Nerzöl.

Pflanzenöle sind allgemein bekannt und kommerziell erhältlich. Unter dem Begriff Pflanzenöle im Sinne der vorliegenden Erfindung werden z.B. Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl verstanden, wobei unter den Pflanzenölen auch deren Umesterungsprodukte verstanden werden, z.B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für Pflanzenöle sind C₁₀-C₂₂-Fettsäure-Ester von Glycerin oder Glykol mit den C₁₀-C₂₂-Fettsäuren, oder C₁-C₂₀-Alkyl-C₁₀-C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Die Pflanzenöle können in den erfindungsgemäßen Ölsuspensionskonzentraten z.B. in Form kommerziell erhältlicher Pflanzenöle, insbesondere Rapsöle wie Rapsölmethylester, z.B. Phytorob®B (Novance, Frankreich), Edenor® MESU und Agnique®ME-Reihe (Cognis, Deutschland) Radia®-Reihe (ICI), Prilube®-Reihe (Petrofina) oder Biodiesel oder in Form kommerziell erhältlicher pflanzenölhaltiger Formulierungszusatzstoffe, insbesondere solcher auf Basis von Rapsölen wie Rapsölmethylester, z.B. Hasten® (Victorian Chemical Company, Australien, nachfolgend Hasten genannt, Hauptbestandteil: Rapsölethylester), Actirob®B (Novance, Frankreich, nachfolgend ActirobB genannt, Hauptbestandteil: Rapsölmethylester), Rako-Binol® (Bayer AG, Deutschland, nachfolgend Rako-Binol genannt, Hauptbestandteil: Rapsöl), Renol® (Stefes, Deutschland, nachfolgend Renol genannt, Pflanzenölbestandteil: Rapsölmethylester) oder Stefes Mero® (Stefes, Deutschland, nachfolgend Mero genannt, Hauptbestandteil: Rapsölmethylester) enthalten sein.

Beispiele für synthetische Fettsäureester sind z.B. solche die sich von Fettsäuren mit ungerader Kohlenstoffatomanzahl ableiten, wie C₁₁-C₂₁-Fettsäureester.

Bevorzugte organische Lösungsmittel sind aromatische Kohlenwasserstoffe, aliphatische Kohlenwasserstoffe und Fettsäureester wie pflanzliche Öle wie Triglyceride von Fettsäuren mit 10 bis 22 C-Atomen, die sowohl gesättigt als auch ungesättigt, linear oder verzweigt sein können und gegebenenfalls weitere funktionelle Gruppen tragen, wie Maiskeimöl, Rapsöl, Sonnenblumenkernöl, Baumwollsaatöl, Leinöl, Sojaöl, Kokosöl, Palmöl, Distelöl oder Rizinusöl, und deren Umesterungsprodukte wie Fettsäurealkylester, sowie Mischungen hieraus.

Die Lösungsmittel können im Gemisch enthalten sein. Das verwendete Lösungsmittel bzw. Lösungsmittelgemisch weist bevorzugt ein geringes Lösevermögen für das verwendete bzw. die verwendeten Thienyl-Sulfonamide (Komponente a) auf.

Der Gesamtlösungsmittelanteil in den erfindungsgemäßen Ölsuspensionskonzentraten liegt im allgemeinen zwischen 5 und 95 Gew.%, bevorzugt im Bereich zwischen 20 und 80 Gew.%. Der Anteil an polaren Lösungsmitteln wie aprotischen, polaren liegt im allgemeinen unter 20 Gew.-%, bevorzugt im Bereich von 0 bis 10 Gew.%.

Als optionale Komponente c) sind in den erfindungsgemäßen Ölsuspensionskonzentraten Safener enthalten, die geeignet sind, Schäden an der Kulturpflanze zu reduzieren oder zu vermeiden. Geeignete Safener sind z.B. aus WO-A-96/14747 und der dort zitierten Literatur bekannt. Die Safener können in dem organischen Lösungsmittel in suspendierter und/oder in gelöster Form, vorzugsweise in gelöster Form vorliegen.

Folgende Verbindungen sind als Safener geeignet:
1)
   1-(2,4-Dichlorphenyl)-5-(ethoxycarbonyl)-5-methyl-2-pyrazolin-3-carbonsäureethylester (S1-1, Mefenpyr-diethyl, PM S. 781-782), 5,5-Diphenyl-2-isoxazolin-carbonsäureethylester (S1-9, Isoxadifen-ethyl) oder die Verbindung vom Typ der Acylsulfamoylbenzoesäureamide, der nachfolgenden Formel (VIII), die z.B. bekannt sind aus WO 99/16744. 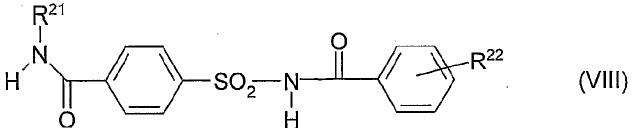 worin R²¹ für Cyclo-Propyl und R²² für 2-OCH₃ steht (Verbindung S3-1). Safener sind Mefenpyr-diethyl (S1-1), Isoxadifen-ethyl (S1-9) und (S3-1).

Soweit in den erfindungsgemäßen Ölsuspensionskonzentraten Safener c) enthalten sind, beträgt deren Gewichtsanteil im allgemeinen 0,1 bis 60 Gew.%, insbesondere 1 bis 40 Gew.%, besonders bevorzugt 2 bis 40 Gew.-%, ganz besonders bevorzugt 2 bis 30 Gew.-%.

Das Gewichtsverhältnis der Komponente a) zu der Komponente c) kann in einem weiten Bereich variieren, und liegt im allgemeinen zwischen 1:100 und 100:1, bevorzugt zwischen 1:10 und 10:1.

Als optionale agrochemische Wirkstoffe e) können beispielsweise von den Komponenten a) und c) verschiedene agrochemische Wirkstoffe wie Herbizide, Fungizide, Insektizide, Pflanzenwachstumsregulatoren und dergleichen enthalten sein. Die agrochemischen Wirkstoffe e) können in dem organischen Lösungsmittel in suspendierter und/oder gelöster Form vorliegen.

Als optional enthaltene von den Komponenten (a) und (c) verschiedene agrochemische Wirkstoffe (e) kommen für die erfindungsgemäßen Ölsuspensionskonzentrate insbesondere Herbizide in Frage, beispielsweise die nachfolgend genannten bekannten Herbizide, wie sie in z.B. Weed Research 26, 441-445 (1986), oder "The Pesticide Manual", 13th edition, The British Crop Protection Council, 2003, und dort zitierter Literatur beschrieben sind, z.B. in Mischungsformulierungen oder als Tank-Mischpartner. Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere: Acetochlor, Aclonifen, Alachlor, Amicarbazone, Amidosulfuron, Amitrole, Anilofos, Asulam und Asulam-sodium, Atrazine, Benazolin und Benazolinethyl, Benfluralin, Benfuresate, Bispyribac-sodium, Bromoxynil, Bromoxynylheptanoat, Bromoxynil-octanoat, Bromoxynil-potassium, Carfentrazone-ethyl, Chlorsulfuron, Clodinafop-propargyl, 2,4-D und seine Salze, Amine und Ester, Desmedipham, Dicamba und seine Salze, Dicamba-diolamine, Dichlorprop-P, Diclofop-methyl, Difenzoquat, Difenzoquat metilsulfate, Diflufenican, Dimethenamid, Dimethenamid-P, Ethofumesate, Ethoxysulfuron und dessen Natriumsalz, Fenoxaprop-P-ethyl, Fentrazamide, Florasulam, Fluazofop-P-ethyl, Fluazifop-P-butyl, Flucarbazone-sodium, Fluazolate, Flufenacet, Flupyrsulfuron-methyl und dessen Natriumsalz, Fluroxypyr und seine Ester wie Fluroxypyr-meptyl, Flurtamone, Foramsulfuron, Glufosinate, Glufosinate-ammonium, Glyphosate, Glyphosateammonium, Glyphosate-isopropylammonium, Glyphosate-sodium, Glyphosatetrimesium, Imazamox, Imazapic, Iodosulfuron-methyl-sodium, loxynil, loxyniloctanoate, loxynil-sodium, Isoproturon, Isoxachlortole ([4-chlor-2-(methylsulfonyl)-phenyl](5-cyclopropyl-4-isoxazolyl)-methanon bekannt aus EP 470 856), Isoxaflutole, Lactofen, Linuron, MCPA, Mecoprop-P, Mefenacet, Mesosulfuron-methyl und dessen Natriumsalz, Mesotrione, Metamitron, Methabenzthiazuron, Metobromuron, Metolachlor, S-Metolachlor, Metosulam, Metribuzin, Metsulfuron, Metsulfuronmethyl, , Neburon, Nicosulfuron, Oxadiargyl, Oxadiazon, Oxaziclomefone, Pendimethalin, Phenmedipham, Picolinafen, Propoxycarbazone-sodium, Prosulfuron, Pyraclonil (1-(3-chlor-4,5,6,7-tetrahydropyrazolo[1,5-a]pyridin-2-yl)-5-(methyl-2-propinylamino)-1H-pyrazole-4-carbonitril bekannt aus WO 94/08999), Pyraflufen-ethyl, Rimsulfuron, Sulcotrione, Sulfosate, Sulfosulfuron, Terbuthylazine, Thifensulfuron-methyl, Tralkoxydim, Triasulfuron, Tribenuron-methyl, Tritosulfuron (N-[[[4-methoxy-6-(trifluormethyl)-1,3,5-triazin-2-yl]amino]carbonyl]-2-(trifluormethyl)-benzolsulfonamid (B. 264) bekannt aus DE 4038430), 4-(4,5-Dihydro-4-methyl-5-oxo-3-trifluormethyl-1H-1,2,4-triazol-1-yl)-2-(ethylsulfonylamino)-5-fluor-benzolcarbothioamid (HWH4991, vgl. WO-A-95/30661), 2-Chlor-N-[1-(2,6-dichlor-4-difluormethyl-phenyl)-4-nitro-1H-pyrazol-5-yl]-propancarbonsäureamid (SLA5599, vgl. EP-A-303153), und die Verbindungen 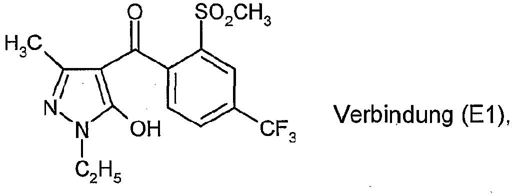 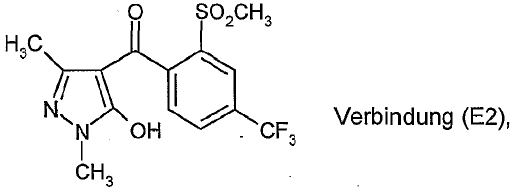 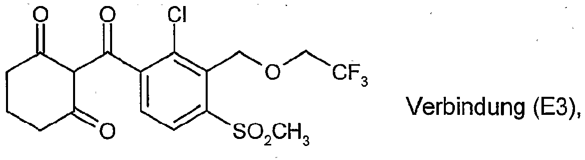 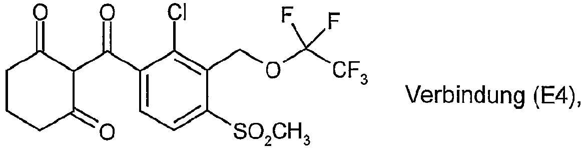 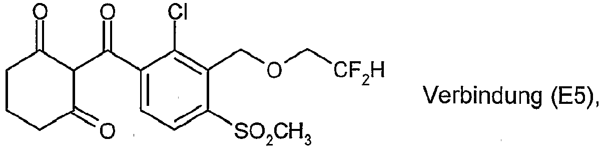 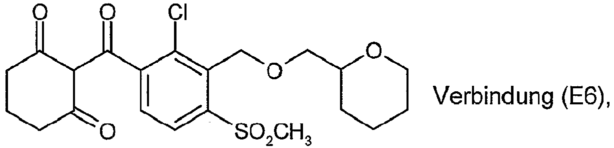 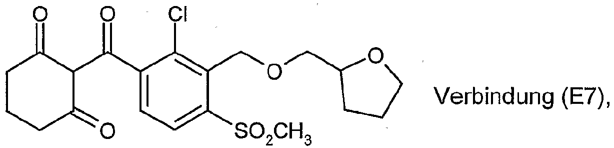 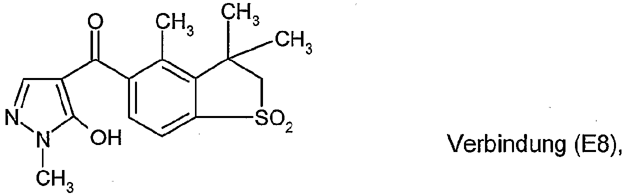 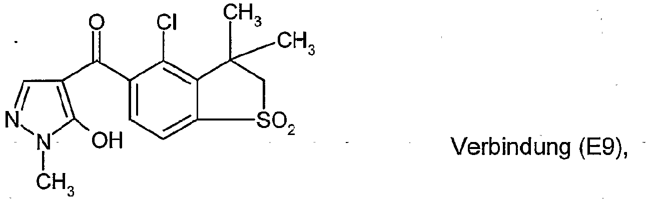 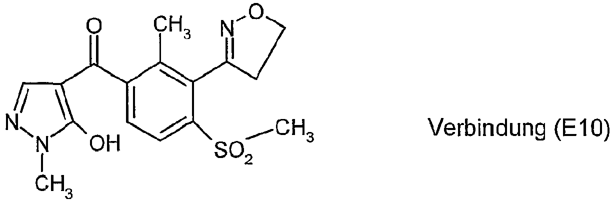 und

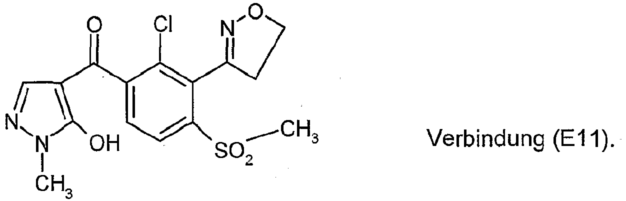

Die Verbindungen (E1) und (E2) sind aus der WO 01/74785, die Wirkstoffe (E3) bis (E7) aus der WO 00/21924 und die anderen Wirkstoffe (E8) bis (E11) aus der WO 96/26206, WO 96/25412 und der US 20020016262 bekannt.

Bevorzugte Komponenten e) sind (E1), (E2), (E3), (E4), (E5), (E6), (E7), (E8), (E9), (E10) und (E11) in sämtlichen ihrer Anwendungsformen einschließlich der Salze, insbesondere der Alkalimetallsalze wie Natrium- oder Kaliumsalze, sowie Bromoxynil (E12), Mesosulfuron (E13), Diflufenican (E14), Sulcotrione (E15), Mesotrione (E16), Rimsulfuron (E17), Foramsulfuron (E18), Nicosulfuron (E19), Flufenacet (E20), Isoxaflutole (E21), lodosulfuron (E22), Flupyrsulfuron (E23), Glyphosate (E24), Atrazin (E25), Fenoxaprop (E26), Propoxycarbazone (E27), Amidosulfuron (E28) und Ethoxysulfuron (E29), in sämtlichen ihrer Anwendungsformen einschließlich der Salze und Ester, insbesondere der Alkalimetallsalze wie Natrium- oder Kaliumsalze und der C₁-C₁₀-Alkylester wie Methyl-, Ethyl-, Butyl, Heptyl- oder Octylester.

Soweit in den erfindungsgemäßen Ölsuspensionskonzentraten agrochemische Wirkstoffe e) enthalten sind, beträgt deren Gewichtsanteil im allgemeinen 0,5 bis 50 Gew.-%, insbesondere 3 bis 20 Gew.-%.

Der in den erfindungsgemäßen Ölsuspensionskonzentraten enthaltene Gesamtwirkstoffgehalt (Summe der Komponente a) + c) + e)) beträgt im allgemeinen 1 bis 80 Gew.%, insbesondere 2 bis 60 Gew.%.

Die in den erfindungsgemäßen Ölsuspensionskonzentraten optional enthaltenen Sulfosuccinate (Komponente d) können z.B. Mono- oder Diester der Sulfobernsteinsäure sein, vorzugsweise solche der allgemeinen Formel (III)

R¹-(X₁)ₙ-O-CO-CH₂-CH(SO₃M)-CO-O-(X₂)ₘ-R² (III)

, worin
- R¹: H oder ein unsubstituierter oder substituierter C₁-C₃₀-Kohlenwasserstoffrest wie C₁-C₃₀-Alkyl oder C₇-C₃₀-Alkylaryl bedeutet,
- R²: H oder ein unsubstituierter oder substituierter C₁-C₃₀-Kohlenwasserstoffrest wie C₁-C₃₀-Alkyl oder C₇-C₃₀-Alkylaryl bedeutet, oder ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenylammoniumkation,
- X¹, X²: unabhängig voneinander gleich oder verschieden eine Spacereinheit wie eine Polyethereinheit oder eine Polyestereinheit bedeuten,
- n,m: unabhängig voneinander gleich oder verschieden Null oder 1 sind, vorzugsweise Null sind, und
- M: ein Kation ist, z.B. ein Metallkation wie ein Alkali- oder Erdalkalimetallkation, oder ein Ammoniumkation wie NH₄, Alkyl-, Alkylaryl- oder Poly(arylalkyl)phenyl-ammoniumkation.

Bevorzugt sind Sulfosuccinate der Formel (III), worin R¹ und R² unabhängig voneinander gleich oder verschieden lineare, verzweigte oder cyclische, gesättigte oder ungesättigte C₁-C₂₀- vorzugsweise C₄-C₁₈-Alkylreste sind, wie Methyl-, Ethyl-, Butyl-, Hexyl-, Cyclohexyl-, Octyl wie 2-Ethylhexyl-, Decyl-, Tridecyl- oder Octadecyl-Reste, oder R¹ und R² sind C₇-C₂₀-Alkylarylreste, wie Nonylphenyl, 2,4,6-Tri-secbutylphenyl, 2,4,6-Tris-(1-phenylethyl)-phenyl, Alkylbenzyl oder ein Hydrozimtrest, X₁ und X₂ unabhängig voneinander gleich oder verschieden Polyethereinheiten sind, wie Polyethylenglykole -(C₂H₄O)ₚ- oder Polypropylenglykole -(C₃H₆O)ₚ- mit p=1 bis p=20, insbesondere p=1 bis p=12, oder Polyestereinheiten sind, wie Polyhydroxybuttersäure -(CH[CH₃]-CH₂-COO)_{q}- oder Polymilchsäure -(CH[CH₃]-COO)_{q}- mit q=1 bis q=15, insbesondere q=1 bis q=8,
n, m unabhängig voneinander gleich oder verschieden Null oder 1 sind, vorzugsweise Null sind, und M ein Kation ist, z.B. ein Metallkation, wie Alkali- oder Erdalkalimetallkation, oder ein Ammoniumkation, welches alkyl-substituiert sein kann.

Optional enthaltene Sulfosuccinate sind, beispielsweise
a1) ein- oder zweifach mit linearen, cyclischen oder verzweigten aliphatischen, cycloaliphatischen und/oder aromatischen Alkoholen verestertes Sulfosuccinat, beispielsweise mit 1 bis 22 C-Atomen im Alkylrest, vorzugsweise ein- oder zweifach mit Methanol, Ethanol, (Iso)propanol, (Iso)butanol, (Iso)pentanol, (Iso)hexanol, Cyclohexanol, (Iso)heptanol, (Iso)octanol (insbesondere: Ethylhexanol), (Iso)nonanol, (Iso)decanol, (Iso)undecanol, (Iso)dodecanol oder (Iso)tridecanol verestertes Mono- oder Dialkalisulfosuccinat, insbesondere Mono- oder Dinatriumsulfosuccinat,
a2) ein- oder zweifach mit (Poly) Alkylenoxidaddukten von Alkoholen verestertes Sulfosuccinat, beispielsweise mit 1 bis 22 C-Atomen im Alkylrest und 1 bis 200, vorzugsweise 2 bis 200 Alkylenoxideinheiten im (Poly) Alkylenoxidanteil, vorzugsweise ein- oder zweifach mit Dodecyl/Tetradecyl-Alkohol +2-5 mol Ethylenoxid oder mit i-Tridecyl+3mol Ethylenoxid verestertes Mono- oder Dialkalisulfosuccinat, insbesondere Mono- oder Dinatriumsulfosuccinat,
a3) das Dialkali, vorzugsweise das Dinatriumsalz von einfach mit Aminen oder aminoterminierten (Poly) Alkylenoxidaddukten von Alkoholen, Aminen, Fettsäuren, Estern oder Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alkylenoxy-Einheiten im (Poly) Alkylenoxidteil, vorzugsweise das Dinatriumsalz von einfach mit Kokosfettamin umgesetztem und nachfolgend sulfoniertem Maleinsäureanhydrid,
a4) das Dialkali, vorzugsweise das Dinatriumsalz von einfach mit Amiden oder (Poly) Alkylenoxidaddukten von Amiden umgesetztem und nachfolgend sulfoniertem Maleinsäureanhydrid, beispielsweise mit 1 bis 22 C-Atomen im Alkylrest und 1 bis 200, vorzugsweise 2 bis 200 Alykylenoxy-Einheiten im (Poly) Alkylenoxidteil, vorzugsweise das Dinatriumsalz von einfach mit Oleylamid+2 mol Ethylenoxid umgesetztem und nachfolgend sulfoniertem Maleinsäureanhydrid und/oder
a5) das Tetraalkali, vorzugsweise das Tetranatriumsalz von N-(1,2-dicarboxyethyl-)-N-Octadecylsulfo-succinamat.

Beispiele kommerziell erhältlicher und im Rahmen der vorliegenden Erfindung bevorzugter Sulfosuccinate der Gruppen a1) bis a5) sind nachfolgend aufgeführt:
a1) Natrium-Dialkylsulfosuccinat, z.B. Natrium-Di(C₄-C₁₈)alkylsulfosuccinat wie Natrium-Diisooctylsulfosuccinat, vorzugsweise Natrium-Di(2-ethylhexyl)sulfosuccinat, kommerziell beispielsweise in Form der Aerosol®-Marken (Cytec), der Agrilan®-oder Lankropol®-Marken (Akzo Nobel), der Empimin®-Marken (Albright&Wilson), der Cropol®-Marken (Croda), der Lutensit®-Marken (BASF) der Triton®-Marken (Union Carbide), der Geropon®-Marken (Rhodia) oder der Imbirol®-, Madeol®- oder Polirol®-Marken (Cesalpinia) erhältlich,
a2) Natrium- Alkoholpolyethylenglykolethersulfosuccinat, kommerziell beispielsweise in Form von Geropon® ACR-Marken (Rhodia) erhältlich,
a3) Dinatrium-Alkoholpolyethylenglykolethersemisulfosuccinat, kommerziell beispielsweise in Form der Aerosol®-Marken (Cytec), der Marlinat®- oder Sermul®-Marken (Condea), der Empicol®-Marken (Albright&Wilson), der Secosol®-Marken (Stepan), der Geropon®-Marken (Rhodia), der Disponil®- oder Texapon®-Marken (Cognis) oder der Rolpon®-Marken (Cesalpinia) erhältlich,
a4) Dinatrium-N-Alkylsulfosuccinamat, kommerziell beispielsweise in Form der Aerosol®-Marken (Cytec), der Rewopol®-oder Rewoderm®-Marken (Rewo), der Empimin®-Marken (Albright&Wilson), der Geropon®-Marken (Rhodia) oder der Polirol®-Marken (Cesalpinia) erhältlich,
a5) Dinatrium-Fettsäureamidpolyethylenglykolethersemisulfosuccinat, kommerziell beispielsweise in Form der Elfanol®- oder Lankropol®-Marken (Akzo Nobel), der Rewoderm®-, Rewocid®- oder Rewopol®-Marken (Rewo), der Emcol®-Marken (Witco), der Standapol®-Marken (Cognis) oder der Rolpon®-Marken (Cesalpinia) erhältlich, und
a6) Tetranatrium-N-(1,2-dicarboxyethyl)-N-Octadecyl-sulfosuccinamat, kommerziell beispielsweise in Form von Aerosol 22®-(Cytec) erhältlich.

Kommerziell sind Sulfosuccinate zum Beispiel als Aerosol®-(Cytec), Agrilan®-oder Lankropol®-(Akzo Nobel), Empimin®-(Huntsman), Cropol®-(Croda), Lutensit®-(BASF), Triton®GR-Reihe (UnionCarbide), Imbirol®-/Madeol®-/Polirol®-(Cesalpinia); Geropon®AR-Reihe oder Geropon®SDS (Rhodia) erhältlich.

Bevorzugte Sulfosuccinate sind z.B. die Natrium-, Kalium- und Ammoniumsalze von Bis(alkyl)sulfosuccinaten, wobei die Alkylreste gleich oder verschieden 4 bis 16 Kohlenstoffatome enthalten, und bevorzugt Butyl-, Hexyl-, Octyl- wie 2-Ethylhexyl-oder Decyl-Reste sind, die linear oder verzweigt sein können.

Soweit in den erfindungsgemäßen Ölsuspensionskonzentraten Sulfosuccinate d) enthalten sind, beträgt deren Gewichtsanteil im allgemeinen 0,5 bis 60 Gew.%, insbesondere 1 bis 30 Gew.%.

Bei den in den erfindungsgemäßen Ölsuspensionskonzentraten optional enthaltenen anorganischen Salzen f) handelt es sich vorzugsweise um basische anorganische Salze. Hierunter werden Salze verstanden, welche in 1%iger wässriger Lösung einen pH-Wert > 7 aufweisen, vorzugsweise schwach basische Salze mit einem pH-Wert zwischen 7 und 11. Beispiele solcher Salze sind Carbonate, Hydrogencarbonate, Hydroxide, Oxide, Hypochlorite und Sulfite, bevorzugt Carbonate und Hydrogencarbonate. Als Kationen enthalten die anorganischen Salze bevorzugt Metallionen, insbesondere Alkali-, Erdalkali- und Übergangsmetallionen, vorzugsweise Alkali- und Erdalkalimetallionen wie Natrium, Kalium, Magnesium oder Calcium. Besonders bevorzugte Salze sind Alkalimetallsalze, insbesondere Alkalimetallcarbonate und Alkalimetallhydrogencarbonate wie Na₂CO₃, K₂CO₃, NaHCO₃ und KHCO₃. Die anorganischen Salze können allein oder im Gemisch enthalten sein.

Soweit in den erfindungsgemäßen Ölsuspensionskonzentraten anorganische Salze f) enthalten sind, beträgt deren Gewichtsanteil im allgemeinen 0,01 bis 20 Gew.-%, bevorzugt 0,01 bis 10 Gew.%, besonders bevorzugt 0,05 bis 5 Gew.-%.

Als übliche Hilfs- und Zusatzstoffe (Komponente g) können in den erfindungsgemäßen Ölsuspensionskonzentraten z.B. noch enthalten sein: Tenside wie Emulgatoren und Dispergatoren, Verdickungs- und Thixotropiermittel, Netz-, Anti-Drift-, Haft-, Penetrations-, Konservierungs- und Frostschutzmittel, Antioxidantien, Lösungsvermittler, Füll-, Träger- und Farbstoffe, Entschäumer, Düngemittel, Verdunstungshemmer, sowie den pH-Wert und die Viskosität beeinflussende Mittel.

Als Emulgatoren und Dispergatoren kommen z.B. nichtionische Emulgatoren und Dispergatoren in Frage, z.B.:
1) polyalkoxylierte, vorzugsweise polyethoxylierte, gesättigte und ungesättigte aliphatische Alkohole,
   - mit 8 bis 24 C-Atomen im Alkylrest, der sich von den entsprechenden Fettsäuren oder aus petrochemischen Produkten ableitet, und
   - mit 1 bis 100, vorzugsweise 2 bis 50, Ethylenoxideinheiten (EO), wobei die freie Hydroxy-Gruppe gegebenenfalls alkoxyliert ist,
   - die z. B. kommerziell als Genapol®X- und Genapol®O-Reihe (Clariant), Crovol®M-Reihe (Croda) oder Lutensol®Reihe (BASF), z.B. Lutensol®-A-Reihe, -AT-Reihe, -AO-Reihe, -ON-Reihe, TO-Reihe oder -XL-Reihe erhältlich sind,
2) polyalkoxylierte, vorzugsweise polyethoxylierte Arylalkylphenole, wie z. B. 2,4,6-Tris-(1-phenylethyl)-phenol (Tristyrylphenol) mit einem mittleren Ethoxylierungsgrad zwischen 10 und 80, bevorzugt 16 bis 40, wie z. B. Soprophor®BSU (Rhodia) oder HOE S 3474 (Clariant),
3) polyalkoxylierte, vorzugsweise polyethoxylierte Alkylphenole mit einem oder mehreren Alkylresten, wie z. B. Nonylphenol oder Tri-sec-butylphenol, und einem Ethoxylierungsgrad zwischen 2 und 40, bevorzugt 4 bis 15, wie z. B. Arkopal®N-Reihe oder Sapogenat®T-Reihe (Clariant),
4) polyalkoxylierte, vorzugsweise polyethoxylierte Hydroxyfettsäuren oder Hydroxyfettsäuren enthaltene Glyceride, wie z. B. Ricinin bzw. Rizinusöl, mit einem Ethoxylierungsgrad zwischen 10 und 80, bevorzugt 25 bis 40, wie z. B. Emulsogen®EL-Reihe (Clariant) oder Agnique®CSO-Reihe (Cognis),
5) polyalkoxylierte, vorzugsweise polyethoxylierte Sorbitanester, wie z. B. Atplus®309 F (Uniqema) oder Alkamuls®-Reibe (Rhodia),
6) polyalkoxylierte, vorzugsweise polyethoxylierte Amine, wie z.B. Genamin®-Reihe (Clarian), z.B. Genamin®-C-Reihe, O-Reihe, -S-Reihe oder -T-Reihe, Imbentin® CAM-Reihe (Kolb) oder Lutensol® F - Reihe (BASF),
7) Di- und Tri-block-copolymere, z.B. aus Alkylenoxiden, z.B. aus Ethylen-und Propylenoxid mit mittleren Molmassen zwischen 200 und 10000, vorzugsweise 1000 bis 4000 g/mol, wobei der Massenanteil des polyethoxylierte Blocks zwischen 10 und 80% variiert, wie z. B. Genapol®PF-Reihe (Clariant), Pluronic®-Reihe (BASF), oder Synperonic®PE-Reihe (Uniqema),

Bevorzugte nichtionische Emulgatoren und Dispergatoren sind z.B. polyethoxylierte Alkohole, polyethoxylierte Amine, polyethoxylierte Triglyceride, die Hydroxyfettsäuren enthalten und Polyethylenoxid-Polypropylenoxid-Block-Copolymere.

Soweit in den erfindungsgemäßen Ölsuspensionskonzentraten nichtionischen Emulgatoren und Dispergatoren enthalten sind, beträgt deren Gewichtsanteil im allgemeinen zwischen 1 und 20 Gew.%.

Es kommen auch ionische Emulgatoren und Dispergatoren in Frage, z.B.:
1) polyalkoxylierte, vorzugsweise polyethoxylierte Emulgatoren/Dispergatoren (vgl. Komponente e), die ionisch modifiziert sind, z. B. durch Umsetzung der endständigen freien Hydroxylfunktion des Polyethylenoxidblocks zu einem Sulfat- oder Phosphatester (z.B. als Alkali- und Erdalkalimetallsalze), wie z. B. Genapol®LRO oder Dispergiermittel 3618 (Clariant), Emulphor® (BASF) oder Crafol®AP (Cognis),
2) Alkali- und Erdalkalimetallsalze von Alkylarylsulfonsäuren mit linearer oder verzweigter Alkylkette, wie Phenylsulfonat CA oder Phenylsulfonat CAL (Clariant), Atlox® 3377BM (ICI), Empiphos®TM-Reihe (Huntsman)
3) Polyelektrolyte, wie Ligninsulfonate, Kondensationsprodukte aus Naphthalinsulfonat und Formaldehyd, Polystyrolsulfonat oder sulfonierte ungesättigte oder aromatische Polymere (Polystyrole, Polybutadiene oder Polyterpene), wie Tamol®-Reihe (BASF), Morwet®D425 (Witco), Kraftsperse®-Reihe (Westvaco), Borresperse®-Reihe (Borregard).

Bevorzugte ionische Emulgatoren/Dispergatoren sind z.B. Salze von Alkylarylsulfonsäuren und Polyelektrolyte aus der Polykondensation von Naphthalinsulfonat und Formaldehyd.

Soweit in den erfindungsgemäßen Ölsuspensionskonzentraten ionische Emulgatoren und Dispergatoren enthalten sind, beträgt deren Gewichtsanteil im allgemeinen 0,1 bis 20 Gew.%, insbesondere 0,5 bis 8 Gew.%.

Werden nichtionische oder ionische Emulgatoren und Dispergatoren, neben ihren emulgierenden/dispergierenden Eigenschaften, auch zur Erhöhung der biologischen

Effektivität, z. B. als Penetrations- oder Haftmittel, eingesetzt, kann sich ihr Anteil in den erfindungsgemäßen Ölsuspensionskonzentraten auf bis zu 60 Gew.% erhöhen.

Als Verdickungs- und Thixotropiermittel kommen z.B. in Frage:
1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel)
2) synthetische Silikate, wie Silikate der Sipernat®-, Aerosil®- oder Durosil®-Reihe (Degussa), der CAB-O-SIL®-Reihe (Cabot) oder der Van Gel-Reihe (R.T. Vanderbilt),
3) Verdicker auf Basis synthetischer Polymere, wie Verdicker der Thixin®-oder Thixatrol®-Reihe (Elementis).
4) Verdicker auf Basis natürlicher Polymere und natürlicher Öle, z.B. aus der Thixin®-oder Thixatrol®-Reihe (Elementis).

Bevorzugte Verdickungs- und Thixotropiermittel sind z.B. modifizierte Schichtsilikate und Verdicker auf Basis synthetischer Polymere.

Soweit in den erfindungsgemäßen Ölsuspensionskonzentraten Verdickungs- und Thixotropiermittel enthalten sind, beträgt deren Gewichtsanteil im allgemeinen 0,1 bis 5 Gew.%, insbesondere 0,2 bis 3 Gew.%.

Beschrieben werden Ölsuspensionskonzentrate, enthaltend:
a) 0,1 bis 30 Gew.-% eines oder mehrerer herbizider Wirkstoffe aus der Gruppe der Thienyl-Sulfonamide,
b) 20 bis 80 Gew.-% eines oder mehrerer Lösungsmittel,
c) 0 bis 40 Gew.-% eines oder mehrerer Safener,
d) 0 bis 30 Gew.-% eines oder mehrerer Sulfosuccinate,
e) 0 bis 20 Gew.-% eines oder mehrerer von a) und c) verschiedener agrochemischer Wirkstoffe,
f) 0 bis 20 Gew.-% eines oder mehrerer anorganischer Salze,
g) 0 bis 20 Gew.-% eines oder mehrerer nichtionischer Emulgatoren und Dispergatoren,
   0 bis 8 Gew.-% eines oder mehrerer ionischer Emulgatoren und Dispergatoren
   0 bis 3 Gew.-% eines oder mehrerer Verdickungs- und Thixotriopiermittel.

Die erfindungsgemäßen Ölsuspensionskonzentrate können durch bekannte Verfahren, z.B. durch Vermischen der Komponenten hergestellt werden. So kann z.B. eine Vormischung hergestellt werden, indem dem organischen Lösungsmittel b) gegebenenfalls enthaltenes Sulfosuccinat d) und gegebenenfalls weitere Hilfs- und Zusatzstoffe g) zugegeben werden. Dann werden gegebenenfalls verwendete lösliche agrochemische Wirkstoffe c) und e) in der Vormischung gelöst. Nach Abschluß des Lösungsprozesses wird festes Thienyl-Sulfonamid a) und gegebenenfalls verwendete unlösliche Wirkstoffe c) und e) in die Mischung suspendiert. Die grobe Suspension wird, gegebenenfalls nach einer Vorvermahlung, einer Feinvermahlung unterzogen.

In einer anderen Ausführungsvariante wird festes Thienyl-Sulfonamid a), sowie gegebenenfalls verwendete unlösliche Komponenten c), e) und g), in das organische Lösungsmittel b), welches optional ein Sulfosuccinat d) enthält, suspendiert und einer Vermahlung unterzogen. Gegebenenfalls verwendete lösliche Wirkstoffe c) und e) sowie Hilfs- und Zusatzstoffe aus g), die keiner Vermahlung bedürfen oder für den Mahlvorgang nicht notwendig sind, werden nach der Vermahlung zugesetzt.

Zur Herstellung der Mischungen können gängige Mischapparate verwendet werden, die gegebenenfalls temperiert werden. Zur Vorvermahlung können z.B. Hochdruckhomogenisatoren oder nach dem Rotor-Stator Prinzip arbeitende Mühlen verwendet werden, wie Ultraturax-Homogenisatoren, z.B. der Fa. IKA, oder Zahnkolloidmühlen, z.B. der Fa. Puck. Für die Feinvermahlung können z.B. diskontinuierliche Perlmühlen, z.B. der Fa. Drais oder kontinuierliche Perlmühlen, der z.B. Fa. Bachofen verwendet werden. Je nach den Eigenschaften der gegebenenfalls vorbehandelten Komponenten, sowie Verfahrens- und sicherheitstechnischen Anforderungen und aus wirtschaftlichen Gründen, kann das Herstellverfahren angepaßt und gegebenenfalls auf eine Vorvermahlung oder auch auf eine Feinvermahlung der Suspension verzichtet werden.

Die zur Herstellung eingesetzten Komponenten a) bis f) können Wasser als Nebenbestandteil enthalten, welches sich in den erfindungsgemäßen Ölsuspensionskonzentraten wiederfindet. Die erfindungsgemäßen Ölsuspensionskonzentrate können daher geringe Mengen von Wasser enthalten, im allgemeinen von 0 bis 5 Gew.%. Bevorzugterweise werden die erfindungsgemäßen Ölsuspensionskonzentrate keinem Trocknungsprozeß unterzogen.

Zur Anwendung können die erfindungsgemäßen Ölsuspensionskonzentrate gegebenenfalls in üblicher Weise zu herbiziden Mitteln verdünnt werden (z.B. mittels Wasser), z.B. zu Suspensionen, Emulsionen, Suspoemulsionen oder Lösungen, vorzugsweise zu Suspoemulsionen oder Emulsionen. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche herbiziden Mittel, auf Basis der erfindungsgemäßen Ölsuspensionskonzentrate.

Die erfindungsgemäßen herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei können die Mittel z.B. im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den herbizide Mitteln verwendeten und wirksamen Dosierungen von herbiziden Verbindungen so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Mittel hinsichtlich der beschriebenen Eigenschaften deutlich übertroffen.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße herbizide Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Das Ölsuspensionskonzentrat der vorliegenden Erfindung weist eine ausgezeichnete chemische Stabilität während der Herstellung und Lagerung auf und eignet sich insbesondere auch für Kombinationen von Wirkstoffen mit unterschiedlichen physikalisch-chemischen Eigenschaften, z. B. eines in organischen Lösungsmitteln schwerlöslichen herbiziden Thienyl-Sulfonamids mit einem löslichen Safener und gegebenenfalls weiteren löslichen agrochemischen Wirkstoffen. Außerdem weist das Ölsuspensionskonzentrat eine ausgezeichnete physikalische Stabilität, eine gute Applizierbarkeit und Anwenderfreundlichkeit, sowie eine hohe biologische Effektivität und Kulturpflanzenverträglichkeit (Selektivität) auf.

Die in den nachfolgenden Beispielen beschriebenen Ölsuspensionskonzentrate wurden wie folgt hergestellt: Es wurde eine Vormischung hergestellt, wobei alle löslichen Komponenten aus d), f) und g), sowie gegebenenfalls der Verdicker in dem Lösungsmittel bzw. Lösungsmittelgemisch b) homogen verteilt werden. Dann wurden lösliche Wirkstoffe c) und e) in der Vormischung gelöst. Nach Abschluß des Lösungsprozesses wurde festes Thienyl-Sulfonamid a) und weitere unlösliche Komponenten aus c) bis g) in die Mischung suspendiert. Die grobe Suspension wurde, nach einer Vorvermahlung, einer Feinvermahlung unterzogen.

Die in den nachfolgenden Beispielen verwendeten Abkürzungen haben, wenn nicht bereits definiert, folgende Bedeutung:
- Bayol® 82: = aliphatisches Mineralöl (Siedebereich ∼170°C), Exxon
- Bentone® 34: = modifiziertes Schichtsilikat, Elementis
- Bentone® 38: = modifiziertes Schichtsilikat, Elementis
- Edenor® MESU: = Rapsölmethylester, Cognis
- Emulsogen® EL-400: = polyethoxyliertes Rizinusöl mit 40 Einheiten Ethylenoxid, Clariant
- Genapol® PF10: = Polyethylenoxid-Polypropylenoxid-Blockcopolymer mit 10% Einheiten Ethylenoxid, Clariant
- Genapol® X060: = polyethoxyliertes iso-Tridecanol mit 6 Einheiten Ethylenoxid, Clariant
- Genapol® V4739: = polyethoxyliertes iso-Tridecanol mit 6 Einheiten Ethylenoxid, methoxy-verkappt, Clariant
- Jeffsol® PC: = Propylencarbonat, Huntsman
- Morwet® D425: = Na - Naphthalin / Formaldehyd Kondensat, Akzo Nobel
- Phenylsulfonat® CA100: = Ca - Dodecylbenzolsulfonat verzweigt, Clariant
- Solvesso® 200: = aromatisches Mineralöl (Siedebereich 219-281°C), Exxon
- Triton® GR-7M E: = Di(2-Ethylhexyl)sulfosuccinat Natriumsalz in aromatischem Lösungsmittel, DOW

### Beispiele

Herstellung und Lagerung eines Ölsuspensionskonzentrats (alle Angaben in Gew.%)

**Tabelle 1:**

| Beispiel | 1 | 2 | 3 | 4 | 5 |
|---|---|---|---|---|---|
| Verbindung A2.1 | | 1,02 | 2,00 | 8,85 | 1,02 |
| Verbindung A2.2 | 1,09 | | | | |
| Verbindung S1-1 | | | | 26,55 | |
| Verbindung S1-9 | 2,02 | 2,06 | | | 2,06 |
| Verbindung S3-1 | | | 4,00 | | |
| Bayol® 82 | | 55,72 | | | 50,72 |
| Solvesso® 200 | 51,89 | | 47,00 | 45,2 | |
| Edenor® MESU | | 8,00 | | | 8,00 |
| Jeffsol® PC | 1,00 | 0,20 | 1,00 | 0,20 | 0,20 |
| Triton® GR-7M E | 25,00 | | 25,00 | | 5,00 |
| Genapol® X060 | | | | | 25,00 |
| Genapol® V4739 | 10,00 | 25,00 | 10,00 | | |
| Genapol® PF10 | 2,00 | 7,00 | 2,00 | | 7,00 |
| Emulsogen® EL-400 | 4,00 | | 4,00 | 8,00 | |
| Phenylsulfonate® CA100 | | | | 10,00 | |
| Morwet® D425 | 2,00 | | 2,00 | | |
| Bentone® 34 | 1,00 | | 1,00 | 1,20 | |
| Bentone® 38 | | 1,00 | | | 1,00 |
| Na₂CO₃ | | | 2,00 | | |

Die Formulierungen der Beispiele 1 bis 5 wurden 8 Wochen bei 40°C gelagert und waren dabei lagerstabil (bestimmt mittels HPLC).

## Patentansprüche

1. Ölsuspensionskonzentrat, enthaltend
a) einen herbiziden Wirkstoff der Formel (II) 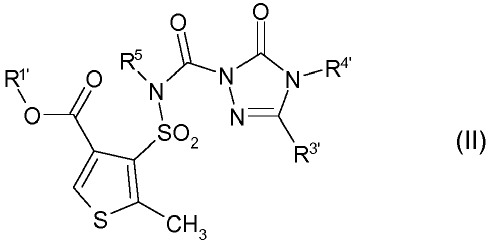
worin R¹ für CH₃,
R³ für OCH₃,
R⁴ für CH₃ und
R⁵ für H oder Na steht
und
b) Propylencarbonat als polares aprotisches Lösungsmittel

2. Ölsuspensionskonzentrat gemäß Anspruch 1, worin der Propylencarbonat-Anteil bei unter 20 Gew.-% liegt.

3. Ölsuspensionskonzentrat gemäß Anspruch 1, worin der Propylencarbonat-Anteil zwischen 0,2 und 1.0 Gew.-% liegt.

4. Ölsuspensionskonzentrat gemäß einem oder mehreren der Ansprüche 1 bis 3, zusätzlich enthaltend einen Safener, ausgewählt aus der Gruppe bestehen aus (a) Mefenpyr-diethyl, (b) Isoxadifen-ethyl und (c) einer Verbindung der Formel (VIII)

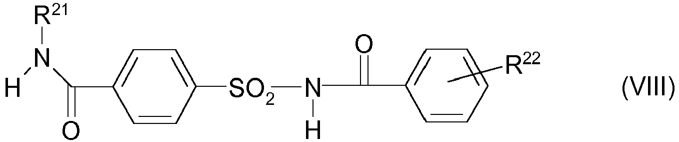

5. Ölsuspensionskonzentrat gemäß einem oder mehreren der Ansprüche 1 bis 4, zusätzlich enthaltend Di(2-Ethylhexyl)sulfosuccinat.

6. Ölsuspensionskonzentrat gemäß einem oder mehreren der Ansprüche 1 bis 5, zusätzlich enthaltend polyethoxyliertes iso-Tridecanol mit 6 Einheiten Ethylenoxid.

7. Ölsuspensionskonzentrat gemäß einem oder mehreren der Ansprüche 1 bis 6, zusätzlich enthaltend ein Polyethylenoxid-Polypropylenoxid-Blockpolymer mit 10% Einheiten Ethylenoxid.

8. Ölsuspensionskonzentrat gemäß einem oder mehreren der Ansprüche 1 bis 7, zusätzlich enthaltend polyethoxyliertes Rizinusöl mit 40 Einheiten Ethylenoxid.

9. Verfahren zur Herstellung eines Ölsuspensionskonzentrats gemäß einem oder mehreren der Ansprüche 1 bis 8, worin die Komponenten gemischt und gegebenenfalls vermahlen werden.

10. Verfahren zur Bekämpfung von Schadpflanzen, worin eine wirksame Menge eines Ölsuspensionskonzentrats gemäß einem oder mehreren der Ansprüche 1 bis 8 auf die Schadpflanzen, Teile der Pflanzen, Pflanzensamen oder die Fläche auf der Pflanzen wachsen appliziert wird.

11. Verwendung eines Ölsuspensionskonzentrats gemäß einem oder mehreren der Ansprüche 1 bis 8, zur Bekämpfung von Schadpflanzen.

12. Verwendung eines Ölsuspensionskonzentrats gemäß einem oder mehreren der Ansprüche 1 bis 8, zur Herstellung eines herbiziden Mittels.

13. Verwendung gemäß Anspruch 12, worin das herbizide Mittel eine Suspension, Emulsion, Suspoemulsion oder eine Lösung ist.

14. Herbizides Mittel, erhältlich aus einem Ölsuspensionskonzentrat gemäß einem oder mehreren der Ansprüche 1 bis 8.

15. Verfahren zur Bekämpfung von Schadpflanzen, worin eine wirksame Menge eines herbiziden Mittels gemäß Anspruch 14 auf die Schadpflanzen, Teile der Pflanzen, Pflanzensamen oder die Fläche auf der Pflanzen wachsen appliziert wird.

16. Verwendung eines herbiziden Mittels gemäß Anspruch 14 zur Bekämpfung von Schadpflanzen.

## Claims

1. An oil suspension concentrate, comprising
a) a herbicidally active compound of the formula (II) 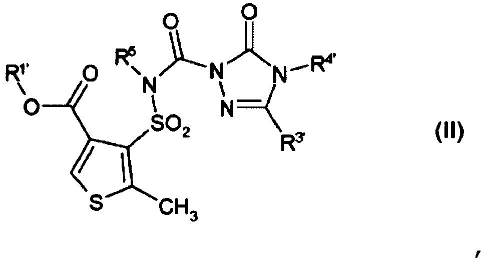
where R¹ represents CH₃,
R³ represents OCH₃,
R⁴ represents CH₃ and
R⁵ represents H or Na,
and
b) propylene carbonate as polar aprotic solvent.

2. The oil suspension concentrate as claimed in claim 1 in which the proportion of propylene carbonate is less than 20% by weight.

3. The oil suspension concentrate as claimed in claim 1 in which the proportion of propylene carbonate is from 0.2 to 1.0% by weight.

4. The oil suspension concentrate as claimed in one or more of claims 1 to 3 which additionally comprises a safener selected from the group consisting of (a) mefenpyr-diethyl, (b) isoxadifen-ethyl and (c) a compound of the formula (VIII) 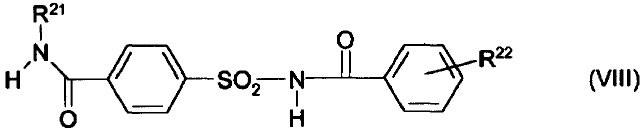 in which R²¹ represents cyclopropyl and R²² represents 2-OCH₃.

5. The oil suspension concentrate as claimed in one or more claims of 1 to 4 which additionally comprises di(2-ethylhexyl) sulfosuccinate.

6. The oil suspension concentrate as claimed in one or more of claims 1 to 5 which additionally comprises polyethoxylated isotridecanol having 6 units of ethylene oxide.

7. The oil suspension concentrate as claimed in one or more of claims 1 to 6 which additionally comprises a polyethylene oxide/polypropylene oxide blockpolymer with 10% ethylene oxide units.

8. The oil suspension concentrate as claimed in one or more of claims 1 to 7 which additionally comprises polyethoxylated castor oil having 40 units of ethylene oxide.

9. A process for preparing an oil suspension concentrate as claimed in one or more of claims 1 to 8, which comprises mixing and, if appropriate, grinding the components.

10. A method for controlling harmful plants, which comprises applying an effective amount of an oil suspension concentrate as claimed in one or more of claims 1 to 8 to the harmful plants, to parts of the plants, to plant seeds or to the area on which the plants grow.

11. The use of an oil suspension concentrate as claimed in one or more of claims 1 to 8 for controlling harmful plants.

12. The use of an oil suspension concentrate as claimed in one or more of claims 1 to 8 for preparing a herbicidal composition.

13. The use as claimed in claim 12 wherein the herbicidal composition is a suspension, an emulsion, a suspoemulsion or a solution.

14. A herbicidal composition, obtainable from an oil suspension concentrate as claimed in one or more of claims 1 to 8.

15. A method for controlling harmful plants, which comprises applying an effective amount of a herbicidal composition as claimed in claim 14 to the harmful plants, to parts of the plants, to plant seeds or to the area on which the plants grow.

16. The use of a herbicidal composition as claimed in claim 14 for controlling harmful plants.

## Revendications

1. Concentrat de suspension huileuse, contenant
a) une substance active herbicide de la formule (II) 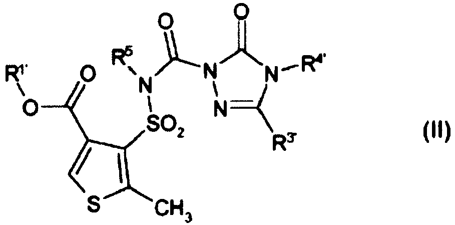 dans laquelle
R¹ représente CH₃
R³ représente OCH₃
R⁴ représente CH₃ et
R⁵ représente H ou Na
et
b) du carbonate de propylène comme solvant aprotique polaire.

2. Concentrat de suspension huileuse selon la revendication 1, dans lequel la proportion de carbonate de propylène est inférieure à 20% en poids.

3. Concentrat de suspension huileuse selon la revendication 1, dans lequel la proportion de carbonate de propylène est située entre 0,2 et 1,0% en poids.

4. Concentrat de suspension huileuse selon l'une ou plusieurs des revendications 1 à 3, contenant en outre un phytoprotecteur, choisi dans le groupe constitué par (a) le méfenpyr-diéthyl, (b) l'isoxadifen-éthyl et (c) un composé de formule (VIII) 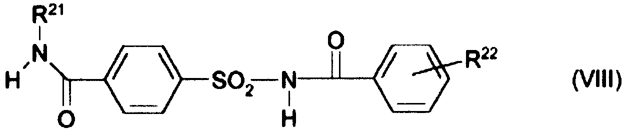 dans laquelle R²¹ représente cyclopropyle et R²² représente 2-OCH₃.

5. Concentrat de suspension huileuse selon l'une ou plusieurs des revendications 1 à 4, contenant en outre du sulfosuccinate de di(2-éthylhexyle).

6. Concentrat de suspension huileuse selon l'une ou plusieurs des revendications 1 à 5, contenant en outre de l'isotridécanol polyéthoxylé présentant 6 unités d'oxyde d'éthylène.

7. Concentrat de suspension huileuse selon l'une ou plusieurs des revendications 1 à 6, contenant en outre un polymère séquencé de poly(oxyde d'éthylène)-poly(oxyde de propylène) présentant 10 % d'unités d'oxyde d'éthylène.

8. Concentrat de suspension huileuse selon l'une ou plusieurs des revendications 1 à 7, contenant en outre de l'huile de ricin polyéthoxylée présentant 40 unités d'oxyde d'éthylène

9. Procédé pour la préparation d'un concentrat de suspension huileuse selon l'une ou plusieurs des revendications 1 à 8, les composants étant mélangés et le cas échéant broyés.

10. Procédé pour lutter contre les plantes nuisibles, une quantité active d'un concentrat de suspension huileuse selon l'une ou plusieurs des revendications 1 à 8 étant appliquée sur les plantes nuisibles, les parties de plantes, les graines de plantes ou la surface sur laquelle les plantes poussent.

11. Utilisation d'un concentrat de suspension huileuse selon l'une ou plusieurs des revendications 1 à 8 pour lutter contre les plantes nuisibles.

12. Utilisation d'un concentrat de suspension huileuse selon l'une ou plusieurs des revendications 1 à 8 pour préparer un agent herbicide.

13. Utilisation selon la revendication 12, dans laquelle l'agent herbicide est une suspension, une émulsion, une suspoémulsion ou une solution.

14. Agent herbicide pouvant être obtenu à partir d'un concentrat de suspension huileuse selon l'une ou plusieurs des revendications 1 à 8.

15. Procédé pour lutter contre les plantes nuisibles, une quantité active d'un agent herbicide selon la revendication 14 étant appliquée sur les plantes nuisibles, les parties de plantes, les graines de plantes ou la surface sur laquelle les plantes poussent.

16. Utilisation d'un agent herbicide selon la revendication 14 pour lutter contre les plantes nuisibles.
